# EUROPÄISCHE PATENTANMELDUNG

(11) **EP 2 719 434 A1**
(43) Veröffentlichungstag der Anmeldung: **16.04.2014**
(21) Anmeldenummer: 13001417.8
(22) Anmeldetag: 19.03.2013
(51) Int. Cl.: B01D 19/00, F17C 13/02

(54) **Verfahren und Einrichtung zur zumindest teilweisen Entgasung eines ein Fluid enthaltenden Gefäßes**

(30) Priorität: 11.10.2012 DE 102012019908
(71) Anmelder: Linde Aktiengesellschaft, 80331 München (DE)
(72) Erfinder: Blanke, Martin, 85521 Riemerling (DE); Jüttner, Roland, 91126 Schwabach (DE); Mandelkow, Antje, 21029 Hamburg (DE)
(74) Vertreter: Gellner, Bernd

(57) **Zusammenfassung**

Die Erfindung betrifft ein Verfahren zur zumindest teilweisen Entgasung eines ein Fluid enthaltenden Gefäßes sowie eine Entgasungseinrichtung zur Durchführung des erfindungsgemäßen Verfahrens.

Mit dem Verfahren bzw. der Entgasungseinrichtung werden die Temperatur und der Druck des Fluides gemessen, und es wird an Hand des gemessenen Temperaturwertes und des gemessenen Druckwertes ermittelt, ob das Fluid in flüssiger oder gasförmiger Phase vorliegt. Im Fall des Vorliegens der Fluides in gasförmiger Phase wird das Gefäß geöffnet und gasförmiges Fluid wird aus dem Gefäß herausgelassen.

## Beschreibung

Die Erfindung betrifft ein Verfahren zur zumindest teilweisen Entgasung eines ein Fluid enthaltenden Gefäßes sowie eine Entgasungseinrichtung zur Durchführung des erfindungsgemäßen Verfahrens.

Bestimmte Medien, insbesondere kryogene Fluide, werden zum Zweck der Speicherung und/oder des Transports oftmals vom gasförmigen Zustand in den flüssigen Zustand überführt. Insbesondere nach längeren Betriebspausen kann dabei das Fluid in Leitungen bzw. in Gefäßen z. B. auf Grund äußerer Erwärmung zumindest teilweise von der flüssigen Phase in den gasförmigen Zustand übergegangen sein. Derartiges gasförmiges Fluid, wie z. B. Kohlenstoffdioxid, kann sich in vielen Anwendungen störend bzw. prozesshindernd auswirken. Demzufolge besteht die Notwendigkeit, die gasförmige Phase von der flüssigen Phase zu separieren und abzuführen. Eine Schwierigkeit besteht dabei darin, festzustellen, wie viel Gas im abzuführenden Massenstrom vorhanden ist.

Eine bisher bekannte Lösung ist z. B. eine Schwimmerschaltung, bei der ein Schwimmer auf der flüssigen Phase aufschwimmt und in Abhängigkeit von seiner Position eine Schaltung betätigt, die das Ablassen von gasförmiger Phase bewirken kann. Eine solche Einrichtung ist jedoch üblicherweise nur für relativ niedrige Drücke geeignet. Des Weiteren ist sie in der Regel relativ störanfällig und kostenintensiv.

Des Weiteren gibt es Entgasungsvorrichtungen, die nur die Temperatur des Fluides berücksichtigen. Nachteilig an dieser Verfahrensweise ist, dass sobald sich der Prozeßdruck ändert, die Wirkung nicht mehr zuverlässig ist.

Hiervon ausgehend liegt daher der vorliegenden Erfindung die Aufgabe zu Grunde, ein Verfahren sowie eine Einrichtung zur Verfügung zu stellen, mittels derer in einfacher, zuverlässiger und kostengünstiger Weise die gasförmige Phase eines Fluides von seiner flüssigen Phase separiert und abgeführt werden kann.

Dieses Problem wird durch das erfindungsgemäße Verfahren zur zumindest teilweisen Entgasung eines ein Fluid enthaltenden Gefäßes mit den Merkmalen des Anspruches 1 sowie durch die erfindungsgemäße Entgasungseinrichtung mit den Merkmalen des Anspruches 7 gelöst.

Vorteilhafte Ausgestaltungen des erfindungsgemäßen Verfahrens sind in den Unteransprüchen 2 bis 6 angegeben. Vorteilhafte Ausgestaltungen der erfindungsgemäßen Entgasungseinrichtung sind in den Unteransprüchen 8 bis 10 angegeben.

Das erfindungsgemäße Verfahren ist auf die zumindest teilweise Entgasung eines ein Fluid enthaltenden Gefäßes, insbesondere einer Leitung, gerichtet, wobei die Temperatur und der Druck des Fluides gemessen werden, anhand des gemessenen Temperaturwertes und des gemessenen Druckwertes ermittelt wird, ob das Fluid in flüssiger oder gasförmiger Phase vorliegt, im Fall des Vorliegens des Fluides in gasförmiger Phase das Gefäß geöffnet wird und gasförmiges Fluid aus dem Gefäß herausgelassen wird. Vorzugsweise wird damit eine vollständige Entgasung des Gefäßes erreicht. Das jeweilige Fluid ist vorzugsweise Kohlenstoffdioxid, wobei die Erfindung auch an anderen kryogenen Gasen wie z. B. Stickstoff, Sauerstoff, Argon usw. einsetzbar ist. Weiterhin können auch nicht kryogene, also unter Druck verflüssigbare Gase wie Lachgas, Butan, Propan, etc. mit der Erfindung entgast werden. Auf Grund der Durchführung von einfach handhabbaren Temperatur- bzw. Druckmessungen ist das Verfahren in seiner Durchführung robust sowie einfach und kostengünstig auszuführen.

Vorzugsweise ist vorgesehen, dass zur Ermittlung des Phasenzustandes des Fluides der Temperaturmesswert und der Druckmesswert mit gespeicherten Temperatur- und Druckwerten der Siedepunktskurve des Fluides verglichen werden. Unter der Siedepunktskurve sind dabei alle Temperatur-Druck-Wertepaare an der Phasengrenzlinie Gas-Flüssigkeit in jeweiligem Phasendiagramm zu verstehen, wobei auf der Siedepunktskurve ein thermisches Gleichgewicht herrscht. Das Phasendiagramm mit Siedepunktskurve stellt dabei dar, bei welchen Drücken und Temperaturen das jeweilige Medium gasförmig, flüssig oder auch im Extremfall fest ist. Diese Siedepunktskurve ist dabei durch den Tripelpunkt und den kritischen Punkt begrenzt.

Es ist dabei möglich, die Siedepunktskurve als mathematische Funktion zu erfassen und zu ermitteln, ob die gemessenen Temperatur - bzw. Druckwerte die Funktion erfüllen oder nicht. In Abhängigkeit dieses Ergebnisses lässt sich eine Aussage hinsichtlich des Phasenzustandes des Fluides generieren. Alternativ können mehrere Wertepaare der Siedepunktskurve erfasst bzw. gespeichert sein und ein Vergleich des ermittelten Temperatur-Druck-Wertepaares mit einem z. B. nächstliegenden Wertepaar der Siedepunktskurve angestellt werden. In Abhängigkeit vom Vergleichsergebnis kann eine Aussage hinsichtlich des Phasenzustandes des Fluides generiert werden. Insbesondere lässt sich der Vergleich derart durchführen, dass z. B. gemäß des gemessenen Druckwertes der nächstliegende Druckwert eines Wertepaares der Siedepunktskurve ermittelt wird, der z. B. der nächst höhere oder auch nächst kleinere Wert sein kann. Anschließend kann dann der gemessene Temperaturwert mit dem Temperaturwert des betreffenden Wertepaares der Siedepunktskurve verglichen werden, um daraus einen Rückschluss über den Phasenzustand des Fluides zu ziehen.

In einer weiteren bevorzugten Ausführungsform ist vorgesehen, dass das Gefäß eine Hauptleitung sowie eine von der Hauptleitung abzweigende Entgasungsleitung umfasst, die zwecks Herauslassen von Fluid geöffnet werden kann, wobei die Messung der Temperatur und des Drucks in oder an der Entgasungsleitung erfolgt. Das Gefäß selbst bildet dabei einen Strömungspfad in einer Richtung aus. Der Strömungspfad in der Entgasungsleitung führt dabei von der Hauptleitung weg.

Bei dieser Ausbildung eines Fluid-Strömungspfades durch das Gefäß erfolgt die Messung der Temperatur und des Drucks bevorzugt im Strömungspfad vor der Stelle der Öffnung. Das heißt, dass bei Anordnung der Entgasungsleitung ein Strömungspfad in der Entgasungsleitung ausgebildet ist und die Messung der Temperatur und des Drucks vor der Stelle der Öffnung der Entgasungsleitung realisiert wird.

Hilfreich ist, dass sich das Fluid im Inneren des Gefäßes durch den Joule-Thomson-Effekt abkühlen wird. Darum wird in der Regel die Bestimmung von Druck und Temperatur vor dem Entspannungsventil ausreichend sein.

Optional ist das erfindungsgemäße Verfahren derart ausgestaltet, dass eine weitere Messung der Temperatur und/oder des Drucks im Fluid-Strömungspfad nach der Stelle der Öffnung erfolgt. Das heißt, dass optional eine zweite Messung der Temperatur bzw. des Drucks durchgeführt wird. Es kann allerdings auf die weitere Messung des Drucks verzichtet werden, wenn bekannt ist, dass Umgebungsdruck bzw. atmosphärischer Druck im Fluid vorliegt. Wenn jedoch bekannt ist, dass der Druck nicht dem Umgebungsdruck entspricht, kann die weitere Messung des Drucks erfolgen. Bei Anordnung der Entgasungsleitung erfolgt somit die weitere Messung der Temperatur und des Drucks nach der Stelle der Öffnung der Entgasungsleitung.

Vorzugsweise erfolgt die Öffnung des Gefäßes bzw. der jeweiligen Leitung durch Betätigung eines Magnetventils. Bei Anordnung der Entgasungsleitung ist das Magnetventil in dieser Entgasungsleitung angeordnet. Der Vorteil dieser Ausgestaltung liegt darin, dass eine schnelle Öffnung bzw. Schließung des Gefäßes möglich ist. Somit lässt sich schnell auf eine Phasenänderung an der Temperatur- und Druckmesseinrichtung reagieren, so dass gasförmige Phase exakt von flüssiger Phase separiert werden kann.

Optional kann das Magnetventil durch ein Regelventil ersetzt werden. Die Öffnung erfolgt beispielsweise proportional zur Abweichung von der Siedelinie.

Weiterhin ist vorteilhafter Weise vorgesehen, dass die Messung der Temperatur mittels eines Temperaturfühlers erfolgt und optional der Temperaturfühler beheizt wird. D. h., dass die Temperaturmesseinrichtung ein beheizbarer Temperaturfühler ist. Diese Ausgestaltung hat den Vorteil, dass bei Anliegen von gasförmigem Medium am Temperaturfühler eine lediglich geringfügig wärmere Temperatur gemessen wird als die tatsächliche Mediumtemperatur. Wenn jedoch das am Temperaturfühler anliegende Medium flüssig oder sogar fest sein sollte, wird auf Grund einer stärkeren Wärmeableitung im flüssigen bzw. festen Medium die mit dem beheizten Temperaturfühler gemessene Temperatur signifikant abfallen, insbesondere bei einer tatsächlichen Temperatur des Mediums in der Nähe seiner Siedepunktskurve.

Es wird des Weiteren erfindungsgemäß eine Entgasungseinrichtung zur zumindest teilweisen Entgasung eines ein Fluid enthaltenden Gefäßes, insbesondere einer Leitung, zur Verfügung gestellt, wobei die Entgasungseinrichtung eine Temperaturmesseinrichtung und eine Druckmesseinrichtung aufweist, mit denen die Temperatur und der Druck des Fluides im Gefäß messbar sind. Die Entgasungseinrichtung weist außerdem eine Einrichtung zur Ermittlung des Fluid-Phasenzustandes auf, mit der an Hand der gemessenen Temperatur und des gemessenen Drucks feststellbar ist, ob sich das Fluid im flüssigen oder gasförmigen Zustand befindet. Des Weiteren weist die Entgasungseinrichtung eine Auslasseinrichtung zum Herauslassen von gasförmigem Fluid auf. Diese Auslasseinrichtung wird nur dann betätigt, wenn gasförmiges Fluid erkannt wird.

Vorzugsweise umfasst die Einrichtung zur Ermittlung des Fluid-Phasenzustandes einen Speicher oder ist mit einem Speicher verbunden ist, in dem Temperatur- und Druckwerte der Siedepunktskurve des Fluides abgespeichert sind. Des Weiteren weist die Einrichtung zur Ermittlung des Fluid-Phasenzustandes eine Vergleichseinheit auf, mit der der Temperaturmesswert und der Druckmesswert mit gespeicherten Temperatur- und Druckwerten der Siedepunktskurve des Fluides vergleichbar sind, wobei die Einrichtung zur Ermittlung des Fluid-Phasenzustandes derart ausgestaltet ist, dass mit ihr in Abhängigkeit von Vergleichsergebnis ein Signal zur Betätigung der Auslasseinrichtung generierbar ist.

In alternativer Ausgestaltung kann auch vorgesehen sein, dass die Einrichtung zur Ermittlung des Fluid-Phasenzustandes derart ausgestaltet ist, dass mit ihr gemessene Temperatur- und Druckwerte mit der mathematischen Funktion der Siedepunktskurve verrechnet werden können, um den Phasenzustand des Fluides zu bestimmen.

Wenn der durchgeführte Vergleich ergibt, dass das Fluid in gasförmiger Phase vorliegt, wird ein Signal erzeugt, welches die Betätigung der Auslasseinrichtung bewirkt, so dass das gasförmige Fluid aus dem Gefäß bzw. der jeweiligen Leitung herausgelassen wird und derart das Gefäß bzw. die Leitung entgast wird. Das Signal zur Betätigung der Auslasseinrichtung wird vorzugsweise durch eine monostabile Kippschaltung realisiert, so dass die Auslasseinrichtung nach einer bestimmten Zeitspanne selbsttätig das Gefäß wieder schließt. Vorzugsweise sind Temperatur- und Druckwerte der Siedepunktskurve unterschiedlicher Fluide, bevorzugt kryogener Fluide, in dem Speicher abgelegt, wobei die Einrichtung zur Ermittlung des Fluid-Phasenzustandes derart ausgestaltet ist, dass sie nach einer Eingabe einer Information über das jeweils vorliegende Fluid die Temperatur- und Druckwerte der Siedepunktskurven des betreffenden Fluides bereitstellt.

Zwecks Inbetriebnahme der erfindungsgemäßen Entgasungseinrichtung sollte diese eine Bedieneinrichtung aufweisen, welche es dem Bedienpersonal ermöglicht, den Betrieb der erfindungsgemäßen Entgasungseinrichtung zur Durchführung des erfindungsgemäßen Verfahrens zur Entgasung zu starten.

Insbesondere in seiner Ausgestaltung als Leitung bildet das Gefäß einen Fluid-Strömungspfad aus, wobei die Temperaturmesseinrichtung sowie die Druckmesseinrichtung im Fluid-Strömungspfad vor der Stelle der Öffnung der Leitung angeordnet sind. Wenn das Gefäß eine Hauptleitung sowie eine von der Hauptleitung abzweigende Entgasungsleitung umfasst, die zwecks Herauslassen von Fluid geöffnet werden kann, so sind die Temperaturmesseinrichtung sowie die Druckmesseinrichtung im Fluid-Strömungspfad der Entgasungsleitung vor der Stelle der Öffnung der Entgasungsleitung angeordnet. Optional können auch noch eine weitere Temperaturmesseinrichtung und/oder eine weitere Druckmesseinrichtung nach der Stelle der Öffnung im Fluid-Strömungspfad angeordnet sein.

In günstiger Ausgestaltung der Entgasungseinrichtung ist vorgesehen, dass die Temperaturmesseinrichtung beheizbar ist. Dadurch lässt sich wie oben bezüglich des erfindungsgemäßen Verfahrens beschrieben der jeweilige Phasenzustand des gemessenen Fluides deutlich detektieren. Es ist dabei ausreichend, wenn die Temperatur der Temperaturmesseinrichtung beispielsweise um 2 K bis 5 K höher ist als die tatsächliche Temperatur des gemessenen Fluides.

Weitere Einzelheiten und Vorteile der Erfindung sollen durch die nachfolgende Figurenbeschreibung eines Ausführungsbeispiels an Hand der beiliegenden Figur erläutert werden.

Es zeigt:
- Fig. 1: eine schematische Darstellung der erfindungsgemäßen Entgasungseinrichtung; und
- Fig. 2:: das Phasendiagramm von CO₂.

Die erfindungsgemäße Entgasungseinrichtung 1 ist in dem dargestellten Ausführungsbeispiel an einem Gefäß 10 angeordnet, welches eine Hauptleitung 11 sowie eine davon abzweigende Entgasungsleitung 12 umfasst. Durch die Entgasungsleitung 12 wird ein Fluid-Strömungspfad 13 von der Hauptleitung 11 weg in Richtung einer Stelle der Öffnung 14 ausgebildet. Die Stelle der Öffnung 14 wird durch eine Auslasseinrichtung 30 realisiert, die im vorliegenden Ausführungsbeispiel ein Magnetventil ist. Im Fluid-Strömungspfad 13 ist vor (stromauf) der Stelle der Öffnung 14 bzw. vor der Auslasseinrichtung 30 eine Temperaturmesseinrichtung 20 sowie eine Druckmesseinrichtung 21 angeschlossen. Diese Einrichtungen sind wiederum mit Signalleitungen mit einer Einrichtung zur Ermittlung des Fluid-Phasenzustandes 22 verbunden.

Diese Einrichtung zur Ermittlung des Fluid-Phasenzustandes 22 ist als eine Steuerungs-und/oder Regelungseinheit ausgeführt. In ihr ist die Siedepunktskurve S des jeweiligen Fluides abgelegt, z. B. als mehrere Wertepaare oder auch als mathematische Funktion. Durch einen Vergleich der gemessenen Temperatur- bzw. Druckwerte mit jeweiligen Temperatur- bzw. Druckwerten der Siedepunktskurve S und Zuordnung des Vergleichsergebnisses zu dem jeweiligen Phasenzustand gemäß des Phasendiagramms lässt sich ermitteln, ob das gemessene Fluid in flüssiger oder gasförmiger Phase vorliegt. Mit der Einrichtung zur Ermittlung des Fluid-Phasenzustandes 22 wird dann ein Sprungsignal generiert, welches dem Stellglied 23 zugeführt wird. Dieses Stellglied 23 betätigt dann, bei Feststellung des Vorliegens von gasförmiger Phase des Fluides, die Auslasseinrichtung 30, so dass gasförmiges Fluid aus der Entgasungsleitung 12 entlassen wird. Auf Grund des Sprungsignals wird dabei die Auslasseinrichtung 30 nur über einen bestimmten Zeitraum betätigt und schließt danach selbstständig.

Dabei ist die vorliegende Erfindung nicht auf das selbsttätige Schließen der Auslasseinrichtung 30 eingeschränkt, sondern es kann alternativ auch vorgesehen sein, dass bei Detektion von flüssiger Phase durch die Temperaturmesseinrichtung 20 sowie die Druckmesseinrichtung 21 und die Einrichtung zur Ermittlung des Fluid-Phasenzustandes 22 kein Signal zur Schließung der Auslasseinrichtung 30 generiert wird.

Die dargestellte Auslasseinrichtung 30 ist ein Magnetventil, welches schnell auf den Phasenzustand des an der Temperaturmesseinrichtung 20 bzw. der Druckmesseinrichtung 21 anliegenden Fluides reagieren kann.

Es lässt sich somit bei Detektion gasförmiger Phase in der Entgasungsleitung 12 diese gasförmige Phase im Wesentlichen über die Auslasseinrichtung 30 als Abgas 60 abführen.

Optional weist die erfindungsgemäße Entgasungseinrichtung 1 eine weitere Temperaturmesseinrichtung 40, eine weitere Druckmesseinrichtung 41 sowie eine weitere Einrichtung zur Ermittlung des Fluid-Phasenzustandes 42 auf. Dabei ist die weitere Temperaturmesseinrichtung 40 sowie die weitere Druckmesseinrichtung 41 im Fluid-Strömungspfad 13 nach (stromab) der Stelle der Öffnung 14 in der Entgasungsleitung 12 angeordnet. Durch die weitere Temperaturmesseinrichtung 40, die weitere Druckmesseinrichtung 41 sowie die weitere Einrichtung zur Ermittlung des Fluid-Phasenzustandes 42 kann die Phasenbestimmung mittels der ersten Temperaturmesseinrichtung 20, der ersten Druckmesseinrichtung 21 und der ersten Einrichtung zur Ermittlung des Fluid-Phasenzustandes 22 vorgenommene Bestimmung des Phasenzustandes verifiziert und/oder unterstützt werden. Dabei ist die vorliegende Erfindung nicht auf die Anordnung der weiteren Einrichtung zur Ermittlung des Fluid-Phasenzustandes 42 eingeschränkt, sondern die Entgasungseinrichtung 1 kann auch derart ausgeführt sein, dass die weitere Temperaturmesseinrichtung 40 sowie die weitere Druckmesseinrichtung 41 mit Signalleitungen mit der ersten Einrichtung zur Ermittlung des Fluid-Phasenzustandes 22 verbunden sind.

Zur Inbetriebnahme der erfindungsgemäßen Entgasungseinrichtung zur Durchführung des erfindungsgemäßen Verfahrens (Entgasung) weist die Entgasungseinrichtung 1 außerdem eine Bedieneinrichtung 50 auf, die signaltechnisch mit der Einrichtung zur Ermittlung des Fluid-Phasenzustandes 22 und/oder mit dem Stellglied 23 verbunden ist, um das erfindungsgemäße Verfahren mit der beschriebenen Temperatur- und Druckmessung zu starten oder auch das Verfahren mit der Öffnung der Auslasseinrichtung 30 zu starten, um der Temperaturmesseinrichtung 20 und der Druckmesseinrichtung 21 Fluid zuzuführen und derart mit dem erfindungsgemäßen Verfahren zur Entgasung zu beginnen.

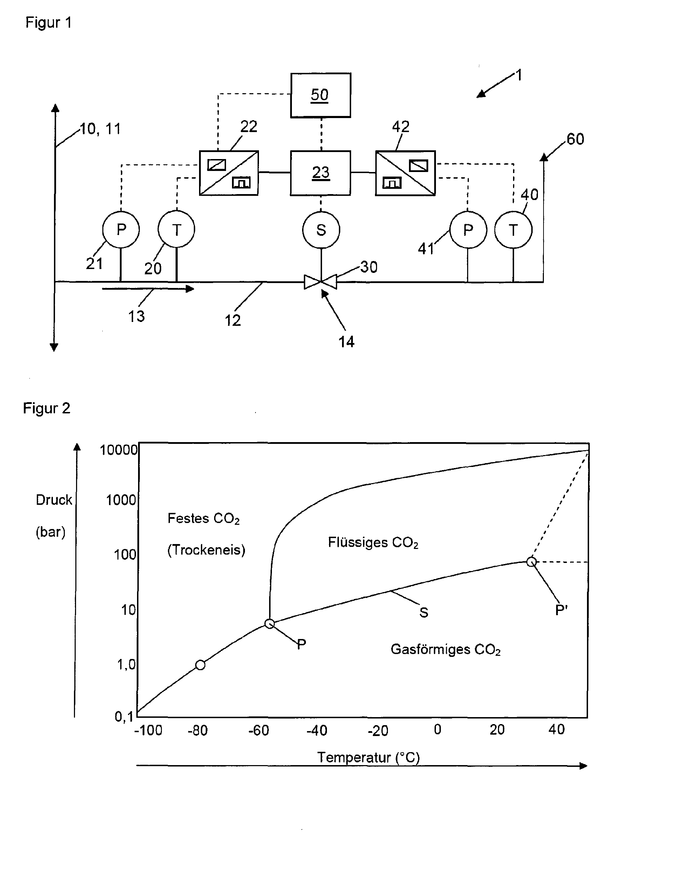

In Fig. 2 ist das Phasendiagramm von CO₂ dargestellt. In diesem ist die Siedepunktskurve S ersichtlich, die zwischen dem Tripelpunkt P, der bei einem Druck von ca. 5,18 bar und einer Temperatur von ca. -56,6°C liegt, bis zum kritischen Punkt P' verläuft. Bei Drücken oberhalb der Siedepunktskurve S liegt das CO₂ im flüssigen Zustand vor. Unterhalb der Siedepunktskurve S liegt das CO₂ im gasförmigen Zustand vor. Gefäße zum Transport und/oder Lagerung von CO₂ bewahren dieses für gewöhnlich in einem Druckbereich von 14 bar bis 20 bar und einen Temperaturbereich von -30°C bis -20°C auf. Die gemessene Temperatur- bzw. Druckwerte lassen sich mit den Temperatur- bzw. Druckwerten der Siedepunktskurve S vergleichen. Je nach Koordinatenposition im Phasendiagramm lässt sich somit ermitteln, ob das jeweils gemessene Temperatur-und Druckwertepaar oberhalb oder unterhalb der Siedepunktskurve S liegt. Dadurch lässt sich feststellen, ob das Fluid mit den jeweils gemessenen Temperatur- und Druckwerten in flüssiger oder gasförmiger Phase vorliegt. Mit der erfindungsgemäßen Einrichtung lässt sich sodann wie erläutert ein Signal generieren, welches in Abhängigkeit vom Ermittlungsergebnis das Auslassen von gasförmigen Fluid aus der Entgasungsleitung 12 realisiert.

### Bezugszeichenliste

| | |
|---|---|
| Entgasungseinrichtung | 1 |
| Gefäß | 10 |
| Hauptleitung | 11 |
| Entgasungsleitung | 12 |
| Fluid-Strömungspfad | 13 |
| Stelle der Öffnung | 14 |
| Temperaturmesseinrichtung | 20 |
| Druckmesseinrichtung | 21 |
| Einrichtung zur Ermittlung des Fluid-Phasenzustandes | 22 |
| Stellglied | 23 |
| Auslasseinrichtung | 30 |
| weitere Temperaturmesseinrichtung | 40 |
| weitere Druckmesseinrichtung | 41 |
| weitere Einrichtung zur Ermittlung des Fluid-Phasenzustandes | 42 |
| Bedieneinrichtung | 50 |
| Abgas | 60 |
| Tripelpunkt | P |
| Kritischer Punkt | P' |
| Siedepunktslinie | S |

## Patentansprüche

1. Verfahren zur zumindest teilweisen Entgasung eines ein Fluid enthaltenden Gefäßes (10), insbesondere einer Leitung, bei dem
- die Temperatur und der Druck des Fluides gemessen wird,
- anhand des gemessenen Temperaturwertes und des gemessenen Druckwertes ermittelt wird, ob das Fluid in flüssiger oder gasförmiger Phase vorliegt,
- im Fall des Vorliegens des Fluides in gasförmiger Phase das Gefäß (10) geöffnet wird und gasförmiges Fluid aus dem Gefäß (10) herausgelassen wird.

2. Verfahren zur zumindest teilweisen Entgasung eines ein Fluid enthaltenden Gefäßes nach Anspruch 1, **dadurch gekennzeichnet, dass** zur Ermittlung des Phasenzustandes des Fluides der Temperaturmesswert und der Druckmesswert mit gespeicherten Temperatur- und Druckwerten der Siedepunktskurve (S) des Fluides verglichen werden.

3. Verfahren zur zumindest teilweisen Entgasung eines ein Fluid enthaltenden Gefäßes nach einem der vorhergehenden Ansprüche, **dadurch gekennzeichnet, dass** das Gefäß (10) eine Hauptleitung (11) sowie eine von der Hauptleitung (11) abzweigende Entgasungsleitung (12) umfasst, die zwecks Herauslassen von Fluid geöffnet werden kann, wobei die Messung der Temperatur und des Drucks in oder an der Entgasungsleitung (12) erfolgt.

4. Verfahren zur zumindest teilweisen Entgasung eines ein Fluid enthaltenden Gefäßes nach einem der vorhergehenden Ansprüche, **dadurch gekennzeichnet, dass** das Gefäß (10) einen Fluid-Strömungspfad (13) ausbildet und die Messung der Temperatur und des Drucks im Fluid-Strömungspfad vor der Stelle der Öffnung (14) erfolgt.

5. Verfahren zur zumindest teilweisen Entgasung eines ein Fluid enthaltenden Gefäßes nach Anspruch 4, **dadurch gekennzeichnet, dass** eine weitere Messung der Temperatur und/ oder des Drucks im Fluid-Strömungspfad (13) nach der Stelle der Öffnung (14) erfolgt.

6. Verfahren zur zumindest teilweisen Entgasung eines ein Fluid enthaltenden Gefäßes nach einem der vorhergehenden Ansprüche, **dadurch gekennzeichnet, dass** die Messung der Temperatur mittels eines Temperaturfühlers erfolgt und der Temperaturfühler beheizt wird.

7. Entgasungseinrichtung (1) zur zumindest teilweisen Entgasung eines ein Fluid enthaltenden Gefäßes (10), insbesondere einer Leitung, mit:
- einer Temperaturmesseinrichtung (20) und einer Druckmesseinrichtung (21), mit denen die Temperatur und der Druck des Fluides im Gefäß (10) messbar sind,
- sowie einer Einrichtung zur Ermittlung des Fluid-Phasenzustandes (22), mit der anhand der gemessenen Temperatur und des gemessenen Drucks feststellbar ist, ob sich das Fluid im flüssigen oder gasförmigen Zustand befindet, und
- einer Auslasseinrichtung (30) zum Herauslassen von gasförmigen Fluid.

8. Entgasungseinrichtung nach Anspruch 7, **dadurch gekennzeichnet, dass** die Einrichtung zur Ermittlung des Fluid-Phasenzustandes (22) einen Speicher umfasst oder mit einem Speicher verbunden ist, in dem Temperatur- und Druckwerte der Siedepunktskurve (S) des Fluides abgespeichert sind,
und dass die Einrichtung zur Ermittlung des Fluid-Phasenzustandes (22) eine Vergleichseinheit aufweist, mit der der Temperaturmesswert und der Druckmesswert mit gespeicherten Temperatur- und Druckwerten der Siedepunktskurve (S) des Fluides vergleichbar sind,
wobei die Einrichtung zur Ermittlung des Fluid-Phasenzustandes (22) derart ausgestaltet ist, dass mit ihr in Abhängigkeit vom Vergleichsergebnis ein Signal zur Betätigung der Auslasseinrichtung (30) generierbar ist.

9. Entgasungseinrichtung nach einem der Ansprüche 7 und 8, **dadurch gekennzeichnet, dass** das Gefäß (10) einen Fluid-Strömungspfad (13) ausbildet und die Temperaturmesseinrichtung (20) sowie die Druckmesseinrichtung (21) im Fluid-Strömungspfad (13) vor der Stelle der Öffnung (14) angeordnet sind.

10. Entgasungseinrichtung nach einem der Ansprüche 7 bis 9, **dadurch gekennzeichnet, dass** die Temperaturmesseinrichtung (20) beheizbar ist.
